# EUROPÄISCHE PATENTSCHRIFT

(11) **EP 0 402 633 B1**
(45) Veröffentlichungstag und Bekanntmachung des Hinweises auf die Patenterteilung: **15.12.1993**
(21) Anmeldenummer: 90108950.8
(22) Anmeldetag: 11.05.1990
(51) Int. Cl.: G01N 21/53, G01N 15/02

(54) **Vorrichtung zur Messung von Aerosolen und in Luft verteiltem Staub**
Device for measuring aerosols and airborne dust
Dispositif de mesure d'aérosols et de poussière dans l'air

(30) Priorität: 30.05.1989 DE 3917571
(43) Veröffentlichungstag der Anmeldung: 19.12.1990
(73) Patentinhaber: Erwin Sick GmbH Optik-Elektronik, D-79183 Waldkirch (DE)
(72) Erfinder: Schleicher, Andreas, Dr., D-7800 Freiburg (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- EP-A- 0 049 048
- WO-A-88/02855
- GB-A- 2 204 678
- US-A- 3 835 315
- US-A- 4 017 186
- US-A- 4 262 206
- US-A- 4 597 666
- Applied Optics, vol. 18, no. 18, 1979, 15 September, pages 3090-3091

## Beschreibung

Die Erfindung betrifft eine Vorrichtung zur Messung von Aerosolen und in Luft verteiltem Staub. gemäß dem Oberbegriff des Patentanspruchs 1. Bei einer solchen Vorrichtung, die beispielsweise auch zur Untersuchung von flüssigen Suspensionen und Emulsionen dienen kann, wird demnach das vom Streuvolumen ausgehende Streulicht zunächst konzentriert und anschließend detektiert.

Die Streulichtphotometrie ist eine bewährte Methode zur Messung von Aerosolen und in der Luft verteiltem Staub sowie zur Untersuchung von flüssigen Suspensionen und Emulsionen. Die Streulichtintensität und deren Verteilung über den Streuwinkel sind von der Teilchengröße und -konzentration abhängig und kann zu deren Bestimmung verwendet werden.

Insbesondere bei bekannter Teilchengröße ist zur Bestimmung der Partikelkonzentration eine Winkelauflösung der Streulichtmessung nicht erforderlich. Vielmehr muß zur Erhöhung des Signal/Rausch-Verhältnisses im interessierenden Streuwinkelbereich ein möglichst großer Raumwinkel des Streulichtes erfaßt werden. Hierzu ist beispielsweise eine große Detektorfläche oder ein entsprechender optischer Konzentrator erforderlich.

Die Verwendung eines großflächigen Detektors, wie z.B. eines PIN-Photodioden-Arrays oder Photomultipliers (vergl. US 4 597 666), ist jedoch nicht nur äußerst kostspielig, eine große Detektorfläche führt zwangsläufig auch zu einer großen elektrischen Kapazität des Gesamtdetektors, durch die das Detektorrauschen erhöht wird.

Andererseits sind Streulichtphotometer bekannt (vergl. GB-A-2204678), bei denen das Streulicht durch eine abbildende Optik auf den Detektor fokussiert wird. Auf diese Weise läßt sich jedoch selbst bei der Verwendung großflächiger Fresnellinsen nur ein begrenzter Raumwinkel erfassen.

Insbesondere bei der in situ-Messung von Staubkonzentrationen in Raumluft, Abluft oder größeren Kaminen handelt es sich meist um ausgedehnte Streuvolumina. In solchen Fällen ist die Verwendung einer abbildenden Optik schon aufgrund der begrenzten Schärfentiefe nicht mehr möglich. Schließlich läßt sich auch die Erfassung des vollen Raumwinkels um ein Streuvolumen durch eine abbildende Optik grundsätzlich nicht realisieren.

Die Verwendung von Fluoreszenzlichtleiten zum Erfassung von schwachem, diffusen Licht ist aus US-A-4262206 bekannt. Der Erfindung liegt die Aufgabe zugrunde, die Vorrichtung der eingangs genannten Art so weiterzubilden, daß insbesondere auch das von ausgedehnteren Streuvolumina ausgehende Streulicht mit einfachsten Mitteln über praktisch beliebig große Raumwinkel gemessen werden kann.

Die Aufgabe wird nach der Erfindung dadurch gelöst, daß der Photoempfänger optisch an einen Lichtaustrittsbereich eines Streulichtkollektors angekoppelt ist,
daß der Streulichtkollektor aus transparentem, fluoreszierenden Material besteht und als Fluoreszenzlichtleiter wirkt,
daß ein jeweils zu erfassender Streuwinkelbereich durch eine entsprechende Größe und Form der streulichterfassenden Fläche des Streulichtkollektors festlegbar ist, und
daß das von der Lichtquelle stammende Lichtbündel den Streulichtkollektor ungehindert passiert.

Hierbei sind vorteilhafterweise mehrere, gleichmäßig über den Lichtaustrittsbereich des Streulichtkollektors verteilte Photoempfänger vorgesehen.

Aufgrund der erfindungsgemäßen Vervendung eines transparenten fluoreszierenden Kollektors zur Messung von Aerosolen und in Luft verteiltem Staub und dergl. kann der Kollektor problemlos der jeweiligen interessierenden Streuwinkelgeometrie angepaßt werden. Selbst bei ausgedehnteren Streuvolumina, wie sie beispielsweise bei der in situ-Messung von Staubkonzentrationen in Raumluft, Abluft oder größeren Kaminen vorliegen können, kann damit das Streulicht praktisch über einen beliebig großen Raumwinkel erfaßt werden. Mit einem solchen größeren Raumwinkel erhöht sich auch das Signal/Rausch-Verhältnis der Streulichtdetektion, so daß insgesamt eine genauere Messung möglich ist.

Der Erfindung liegt demnach insbesondere der Gedanke zugrunde, für die Messung von Aerosolen und in Luft verteiltem Staub transparente fluoreszierende Elemente gleichzeitig als Kollektor für das zu erfassende Streulicht und als optische Konzentratoren zu verwenden, wobei sich die Erfindung die Eigenschaft der entsprechend ausgebildeten transparenten fluoreszierenden Elemente zunutze macht, praktisch unabhängig von deren jeweiliger Formgebung zumindest einen Großteil des Fluoreszenzlichts nach Art eines Lichtleiters an einem verbleibenden Lichtaustrittsbereich zu konzentrieren.

Schließlich ist eine Staubablagerung auf den transparenten fluoreszierenden Kollektoren im Gegensatz zur Staubablagerung auf den Linsen einer abbildenden Optik unproblematisch, da Staubkörner auffallendes Licht zumindest zu einem großen Teil weiter in den Kollektor hineinstreuen. Die Richtungsunabhängigkeit der Kollektoren tragt demnach insbesondere auch dazu bei, selbst bei vorhandenen Staubablagerungen am Kollektor eine möglichst hohe Meßgenauigkeit und -empfindlichkeit sicherzustellen.

Aus der gemessenen Streulichtintensität kann beispielsweise die Massenkonzentration des streuenden Mediums und/oder die im streuenden Medium gegebene Sichtweite bestimmt werden. Ferner ist es auch möglich, aus der Abhängigkeit der gemessenen Streulichtintensität von der Lichtwellenlänge die Größe der im streuenden Medium vorhandenen Teilchen zu bestimmen.

Wahrend insbesondere zur Bestimmung mittlerer Massenkonzentrationen vorzugsweise nur die Intensität der Vorwärtsstreuung gemessen wird, kann insbesondere zur Bestimmung niedrigerer Massenkonzentrationen die Streulichtintensität zweckmäßigerweise über zumindest im wesentlichen den gesamten Raumwinkel gemessen werden.

Ein Teil des Lichtaustrittsbereichs des als Fluoreszenzlichtleiter wirkenden Streulichtkollektors kann verspiegelt bzw. mit Reflektorflächen versehen sein, wobei die Photoempfänger in diesem Falle an dem verbleibenden, nichtverspiegelten Teil des Lichtaustrittsbereichs optisch angekoppelt sind.

Durch die verspiegelten bzw. Reflektorflächen wird nicht nur ein möglicher Lichtverlust verhindert, sondern auch der Lichtaustrittsbereich, an dem Photoelemente vorzusehen sind, verringert. Die Anzahl der erforderlichen Photoelemente kann somit äußerst gering gehalten werden.

Soll beispielsweise lediglich die Vorwärts- oder Rückwärtsstreuung erfaßt werden, so ist es zweckmäßig, den Streulichtkollektor plattenartig auszubilden und den bzw. die Photoempfänger am Plattenrand anzuordnen.

Zur Erfassung der Vorwärts- bzw. Rückwärtsstreuung ist es von Vorteil, wenn der plattenartige Streulichtkollektor zumindest im wesentlichen senkrecht zu einem von der Lichtquelle ausgehenden, vorzugsweise schmalen Lichtbündel angeordnet ist. Hierbei kann der Streulichtkollektor eine zentrale Öffnung aufweisen, durch die das von der Lichtquelle stammende schmale Lichtbündel hindurchtritt.

Bei anderen Ausführungsvarianten ist es jedoch auch möglich, das von einer Lichtquelle stammende Primärlicht seitlich am Streulichtkollektor vorbeizuführen. Sind mehrere Lichtquellen vorgesehen, so ist der Streulichtkollektor vorzugsweise zwischen den von den Lichtquellen erzeugten, vorzugsweise zueinander parallelen Lichtbündeln angeordnet. Eine derartige Anordnung kann beispielsweise bei der Messung der Rückstrahlung verwendet werden.

Insbesondere zur Bestimmung höherer Massenkonzentrationen wird bevorzugt nur die Intensität dieser Rückwärtsstreuung gemessen. Beispielsweise bei einer Anordnung einer oder mehrerer Lichtquellen (z.B. LED) in der Mitte eines plattenartigen Fluoreszenzkollektors oder um diesen herum mit einer Abstrahlung in das streuende Medium erfaßt der Kollektor das vom streuenden Medium zurückgestrahlte Streulicht.

Eine äußerst einfache Anordnung zur Erfassung der Vorwärtsstreuung erhält man dadurch, daß der Streulichtkollektor einen Abstand zur Lichtquelle aufweist und eine der Lichtquelle zugewandte, vom Vorwärtsstreulicht beaufschlagte Kollektorfläche umfaßt.

Eine andere Ausführungsvariante zeichnet sich dadurch aus, daß der Streulichtkollektor im Bereich der Lichtquelle angeordnet ist und eine die Rückstreuung erfassende Kollektorfläche aufweist.

Diejenigen Kollektorflächen, welche keinen Beitrag zum Meßergebnis liefern sollen, können z.B. außenverspiegelt sein. Ferner ist es bei der Verwendung von plattenartigen Streulichtkollektoren meist zweckmäßig, diese kreisförmig auszubilden.

Insbesondere zur Bestimmung der Sichtweite durch die Messung der Lichtstreuung in der Atmosphäre ist es erforderlich, die Streulichtintensität entweder möglichst über den gesamten Raumwinkel zu messen oder einen hierzu proportionalen Anteil zu detektieren. Insbesondere bei unpolarisiertem Einfallslicht wird hierbei die Streulichtintensität zweckmäßigerweise über zumindest im wesentlichen den gesamten Streuwinkelbereich von 0° bis 180° über einen konstanten azimutalen Öffnungswinkel gemessen. Eine solche Geometrie läßt sich bei einem länglichen Streuvolumen im einfallenden Lichtstrahl (z.B. Laserstrahl) beispielsweise durch ein Rohr oder ein Halbrohr um den Primärstrahl oder einen schmalen Kollektorstreifen parallel zum Primärstrahl realisieren.

Soll nicht nur die Vorwärts- bzw. Rückwärtsstreuung gemessen werden, sondern die Streuung über einen möglichst großen Raumwinkel oder einen proportionalen Anteil hierzu erfaßt werden, so ist demnach vorteilhafterweise vorgesehen, daß der Streulichtkollektor rohrförmig oder halbrohrförmig ausgebildet ist und daß die Photoempfänger zumindest an einem Rohrende bzw. an zumindest einem Rohrende und/oder einem der beiden seitlichen Längsränder des Halbrohrs angeordnet sind. Sind lediglich am einen Rohrende Photoempfänger vorgesehen, so ist vorzugsweise das andere Rohrende wiederum mit Reflektorflächen versehen, um einen möglichen Lichtverlust zu verhindern. Entsprechend können auch an den Längsrändern Reflektorflächen vorgesehen sein.

Im Falle der Verwendung eines rohrförmigen bzw. rohrabschnittförmigen Streulichtkollektors ist das von der Lichtquelle erzeugte schmale Lichtbündel vorzugsweise längs der Rohrachse gerichtet.

Die Streulichtkollektoren sind bevorzugt aus fluoreszierendem Plexiglas oder aus anderen, mit fluoreszierendem Farbstoff dotierten organischen oder anorganischen Gläsern gefertigt. Beispielsweise bei einer aus Plexiglas bestehenden Kollektorplatte treten etwa 74% des Fluoreszenzlichtes aufgrund der Totalreflexion nicht aus der Plattenoberfläche aus. Dieser Lichtanteil gelangt vielmehr wie in einem Lichtleiter an die Kanten dieser Platte.

Relativ hohe Wirkungsgrade lassen sich insbesondere dadurch erzielen, daß die Lichtquelle monochromatisches Licht erzeugt und der Fluoreszenzfarbstoff des Streulichtkollektors auf die Wellenlänge des monochromatischen Lichts abgestimmt ist. Vorzugsweise kann auch die Wellenlänge des Fluoreszenzlichts auf die maximale spektrale Empfindlichkeit der Photoempfänger abgestimmt sein.

Gemäß einer weiteren Ausführungsvariante sind mehrere, insbesondere übereinander angeordnete Streulichtkollektoren mit unterschiedlicher Absorptionswellenlänge vorgesehen, wobei diesen transparenten, fluoreszierenden Streulichtkollektoren zumindest eine, polychromatisches Licht abgebende Lichtquelle zugeordnet ist. Das Streulicht kann hierbei bei mehreren Wellenlängen simultan gemessen werden. Aus der Abhängigkeit der Streulichtintensität von der Lichtwellenlänge kann insbesondere auf die Teilchengröße im streuenden Medium geschlossen werden.

In den Unteransprüchen sind weitere vorteilhafte Ausführungsvarianten der Erfindung angegeben.

Die Erfindung wird im folgenden anhand von Ausführungsbeispielen unter Bezugnahme auf die Zeichnung näher erläutert; in dieser zeigt:
- Fig. 1: eine Vorrichtung zur Messung der Intensität der Vorwärtsstreuung mittels eines plattenartigen transparenten fluoreszierenden Streulichtkollektors,
- Fig. 2: eine Vorrichtung zur Messung der Streulichtintensität über annähernd den gesamten Raumwinkel mittels eines transparenten fluoreszierenden Rohres,
- Fig. 3: eine mit der Vorrichtung gemäß Fig. 2 vergleichbare Meßvorrichtung, bei der jedoch zur Erfassung des Streulichts lediglich ein transparentes fluoreszierendes Halbrohr verwendet wird, und
- Fig. 4: eine Vorrichtung zur Messung der Intensität der Rückstreuung, wobei zur Erfassung des interessierenden Streulichts wiederum ein plattenartiger transparenter Fluoreszenzkollektor vorgesehen ist.

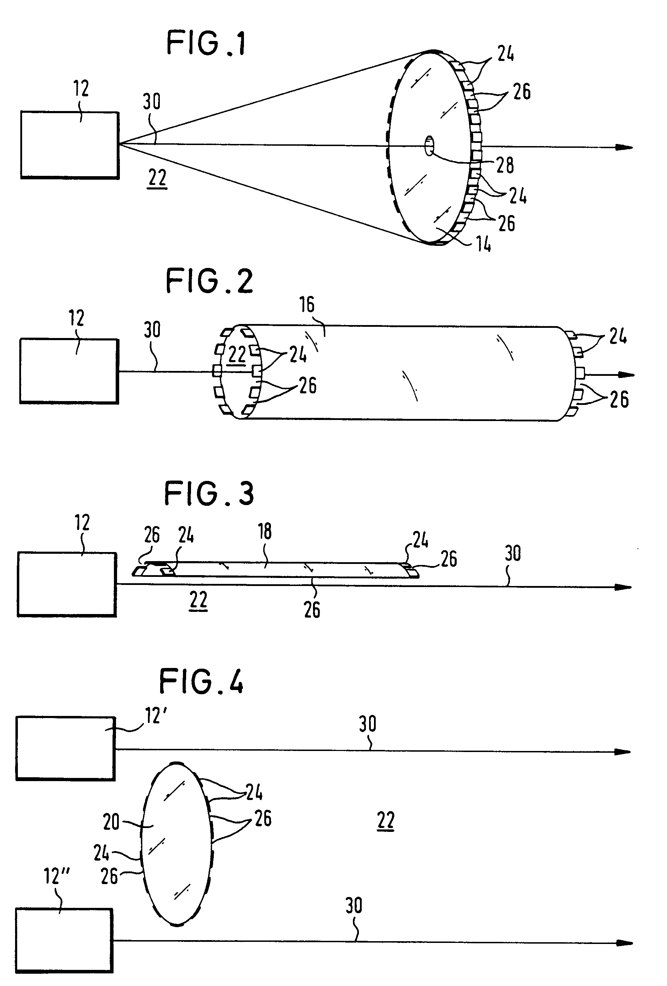

Die in den Fig. 1 bis 4 gezeigte Meßanordnung dient zur Messung der Intensität von Streulicht, welches von einem Streuvolumen ausgeht, in dem ein streuendes Medium 22 mittels Lichtquellen 12 bzw. 12′ und 12˝ von Licht beaufschlagt ist.

Bei den Anordnungen gemäß den Fig. 1 bis 3 wird das Streuvolumen jeweils durch ein von der betreffenden Lichtquelle 12 abgegebenes schmales, in das streuende Medium 22 gerichtetes Lichtbündel 30 erzeugt. Bei der in Fig. 4 gezeigten Meßanordnung sind zur Erzeugung von zwei schmalen Lichtbündeln 30 zwei Lichtquellen 12′ und 12˝ vorgesehen.

Das Streulicht wird jeweils mittels eines transparenten, fluoreszierenden Kollektors 14-20 erfaßt. Hierbei ist zur Konzentration des im Kollektor 14-20 erzeugten Fluoreszenzlichtes jeweils ein als Fluoreszenzlichtleiter wirkender transparenter Fluoreszenzkollektor vorgesehen.

Die verwendeten Streulichtkonzentratoren bzw. -kollektoren 14-20 können insbesondere aus fluoreszierendem Plexiglas oder aus einem anderen mit fluoreszierendem Farbstoff dotierten organischen oder anorganischen Glas gefertigt sein.

Die einen betreffenden Streulichtanteil erfassenden Streulichtkollektoren 14-20 wirken aufgrund der Lichtleitereigenschaft für das Fluoreszenzlicht gleichzeitig als optische Konzentratoren. Das Fluoreszenzlicht kann nämlich aufgrund der Totalreflexion nur zu einem geringen Teil aus der Kollektoroberfläche austreten und gelangt zum größten Teil wie in einem Lichtleiter an begrenzte Lichtaustrittsbereiche 26, wo das konzentrierte Fluoreszenzlicht schließlich mittels Photoempfängern 24 detektiert wird.

Bei den Photoelementen 24 kann es sich beispielsweise um PIN-Photodioden handeln, die zur Detektion des Fluoreszenzlichtes optisch an die Lichtaustrittsbereiche 26 der Fluoreszenzlichtleiter bzw. Streulichtkollektoren 14-20 angekoppelt sind. An den nicht mit Photoempfängern belegten Abschnitten der Lichtaustrittsbereiche sind zur Vermeidung eines möglichen Lichtverlustes Reflektorflächen vorgesehen.

Bei der zur Messung der Massenkonzentration eines Aerosols bestimmten Meßanordnung gemäß Fig. 1 ist lediglich eine Lichtquelle 12 zur Erzeugung eines schmalen, in das streuende Medium 22 gerichteten Lichtbündels 30 vorgesehen. In deutlichem Abstand zur Lichtquelle 12 ist der Streulichtkollektor 14 aus transparentem, fluoreszierenden Material angeordnet, welcher im vorliegenden Fall als großflächige, kreisförmige Platte ausgebildet ist. Der plattenförmige Streulichtkollektor 14 steht senkrecht zum schmalen, einfallenden Lichtbündel 30, welches als Primärstrahl ein ausgedehntes, längliches Streuvolumen erzeugt.

Der plattenartige Streulichtkollektor 14 weist eine zentrale Öffnung 28 auf, durch die dieses von der Lichtquelle 12 stammende schmale Lichtbündel 30 hindurchtritt.

Die der Lichtquelle 12 zugewandte Fläche des Streulichtkollektors 14 erfaßt die vom Streuvolumen ausgehende Vorwärtsstreuung. Die gegenüberliegende Fläche des Streulichtkollektors 14 kann derart behandelt sein, daß eventuell auftreffende Rückstreuung keinen Einfluß auf die Erzeugung des Fluoreszenzlichtes hat.

Die Photoempfänger 24 sind gleichmäßig über den Rand des plattenartigen Streulichtkollektors 14 verteilt. Zur Vermeidung eines möglichen Lichtverlustes können die Bereiche des Plattenrandes zwischen den Photoempfängern 24 mit Reflektorflächen versehen sein.

Durch eine entsprechende Dimensionierung eines derartigen plattenartigen Streulichtkollektors 14 kann erreicht werden, daß innerhalb eines gewissen Größenbereichs der Streupartikel (ca. 1 - 100-fache Wellenlänge) das aufgefangene Streulicht unabhängig von der Partikelgröße und proportional zur Gesamtmasse der Streupartikel ist.

Die Meßanordnung gemäß Fig. 2 ist beispielsweise zur Bestimmung äußerst geringer Aerosol- oder Staubkonzentrationen geeignet, wo ein möglichst großer Teil des Streulichts zu erfassen ist.

Hierzu ist der transparente, fluoreszierende Streulichtkollektor 16 als das von der Lichtquelle 12 kommende schmale Lichtbündel 30 umhüllendes Rohr ausgebildet. Der Primärstrahl bzw. das schmale Lichtbündel 30 erstreckt sich längs der Rohrachse durch das streuende Medium 22.

Die Photoempfänger 24 sind an den Rändern der beiden Rohrenden optisch angekoppelt und wiederum gleichmäßig über den betreffenden Rand verteilt. Grundsätzlich ist jedoch auch denkbar, lediglich an einem Rohrende solche Photoempfänger 24 vorzusehen, wobei dann der nicht mit Photoempfängern belegte Rand wiederum mit Reflektorflächen versehen sein kann. Darüber hinaus kann auch wiederum der Bereich zwischen jeweils zwei Photoempfängern 24 verspiegelt sein bzw. Reflektorflächen aufweisen.

Bei dieser Meßanordnung wird der größte Teil des von den Partikeln im Rohr gestreuten Lichtes von den Rohrwänden absorbiert und infolge der Lichtleitereigenschaften des Rohres zu einem hohen Anteil als Fluoreszenzlicht an die Rohrenden weitergeleitet. Bei konstanter Teilchengrößenverteilung ist die Intensität des an den Kanten der Rohrenden austretenden Fluoreszenzlichtes proportional der Staub- oder Aerosolkonzentration im Rohr.

Fig. 3 zeigt eine der Anordnung gemäß Fig. 2 vergleichbare Meßanordnung, bei der jedoch der transparente, fluoreszierende Streulichtkollektor 18 lediglich durch ein Halbrohr gebildet ist. Das von der Lichtquelle 12 erzeugte schmale Lichtbündel 30 erstreckt sich wiederum längs der Rohrachse durch das streuende Medium 22 hindurch. Am Rand der Rohrenden, d.h. am Lichtaustrittsbereich 26 des als Fluoreszenzlichtleiter wirkenden Streulichtkollektors sind wiederum Photoelemente 24 optisch angekoppelt. Da auch die seitlichen Längsränder einen Lichtaustrittsbereich 26 bilden, sind dort zur Vermeidung eines möglichen Lichtverlusts Reflektorflächen vorgesehen. Es ist jedoch möglich, auch an diesen Längsrändern Photoempfänger anzuordnen.

Diese Anordnung ist insbesondere zur Bestimmung der Sichtweite in der Atmosphäre geeignet, da hierzu die Streulichtintensität entweder möglichst über den gesamten Raumwinkel oder einen hierzu proportionalen Anteil erfaßt werden muß. Bei unpolarisiertem Einfallslicht bedeutet dies, daß über den gesamten Streuwinkelbereich von 0 bis 180° das Streulicht mit einem konstanten azimutalen Öffnungswinkel zu detektieren ist. Eine solche Geometrie läßt sich nun aber bei einem länglichen Streuvolumen im einfallenden Lichtstrahl (z.B. Laserstrahl) durch ein Rohr oder ein Halbrohr um den Primärstrahl oder einen schmalen Detektorstreifen parallel zum Primärstrahl realisieren.

Die in Fig. 4 gezeigte Meßanordnung umfaßt zwei Lichtquellen 12′, 12˝, welche zwei zueinander im wesentlichen parallele schmale Lichtbündel 30 erzeugen.

Als transparenter fluoreszierender Streulichtkollektor 20 ist wiederum wie im Falle der Anordnung gemäß Fig. 1 eine großflächige, kreisförmige Platte vorgesehen.

Der Streulichtkollektor 20 ist jedoch in unmittelbarer Nähe der Lichtquellen 12′, 12˝ und zwischen den beiden schmalen Lichtbündeln 30 angeordnet. Diese Meßanordnung dient zur Erfassung der Rückstreuung des Mediums 22, welche insbesondere bei extrem hohen Staubkonzentrationen ein geeignetes Maß für die Staubkonzentration darstellt. Die Rückstreuung wird im vorliegenden Fall von der von den Lichtquellen 12′, 12˝ abgewändten fläche des plattenartigen Streulichtkollektors 20 erfaßt. Die den Lichtquellen zugewandte Fläche des Streulichtkollektors kann wiederum derart behandelt sein, daß die Vorwärtsstreuung keinen Einfluß auf die Erzeugung des Fluoreszenzlichts hat.

Über den Rand, d.h. den Lichtaustrittsbereich 26 des plattenartigen, kreisförmigen Streulichtkollektors 20 sind wiederum gleichmäßig mehrere Photoelemente 24 verteilt, über die das konzentrierte Fluoreszenzlicht detektiert wird.

Statt der gezeigten äußeren Lichtquellen 12′ und 12˝ können auch eine oder mehrere Lichtquellen im mittleren Bereich des scheibenartigen Streulichtkollektors 20 vorgesehen sein.

Eine vorteilhafte Verwendung der erfindungsgemäßen Meßanordnung ist insbesondere stets dort gegeben, wo preiswerte, großflächige Empfänger bei gleichzeitig großen Aperturen benötigt werden.

Wesentlich ist auch, daß nicht nur der Fluoreszenzfarbstoff zur Erzielung einer maximalen Absorption der Meßwellenlänge angepaßt sein kann, sondern auch das Fluoreszenzlicht in seiner Wellenlänge auf die maximale spektrale Empfindlichkeit des jeweiligen Photoempfängers (z.B. Silizium) abstimmbar ist.

Es sind insbesondere folgende Anwendungsbereiche denkbar: Staubdetektoren in Abgasen, Staubüberwachung am Arbeitsplatz bzw. in Hallenabluft, Klimaanlagen, Sichtweitemeßgeräte usw.. Hierbei kann die Form des transparenten fluoreszierenden Streulichtkollektors jeweils problemlos an die erforderliche Streuwinkelgeometrie angepaßt werden.

## Patentansprüche

1. Vorrichtung zur Messung von Aerosolen und in Luft verteiltem Staub oder dergleichen
- mit einer Lichtquelle (12, 12', 12'') zur Erzeugung eines ausgedehnten, länglichen Streuvolumens mittels eines in das zu messende Medium (22) gerichteten Lichtbündels (30) sowie
- mit zumindest einem Photoempfänger (24),
dadurch **gekennzeichnet,**
- daß der Photoempfänger (24) optisch an einen Lichtaustrittsbereich (26) eines Streulichtkollektors (14, 16, 18, 20) angekoppelt ist,
- daß der Streulichtkollektor (14, 16, 18, 20) aus transparentem, fluoreszierenden Material besteht und als Fluoreszenzlichtleiter wirkt,
- daß ein jeweils zu erfassender Streuwinkelbereich durch eine entsprechende Größe und Form der streulichterfassenden Fläche des Streulichtkollektors (14, 16, 18, 20) festlegbar ist, und
- daß das von der Lichtquelle (12) stammende Lichtbündel (30) den Streulichtkollektor (14, 16, 18, 20) ungehindert passiert.

2. Vorrichtung nach Anspruch 1,
dadurch **gekennzeichnet,**
daß mehrere, gleichmäßig über den Lichtaustrittsbereich (26) des Streulichtkollektors (14-20) verteilte Photoempfänger (24) vorgesehen sind.

3. Vorrichtung nach Anspruch 1 oder 2,
dadurch **gekennzeichnet,**
daß der Lichtaustrittsbereich (26) des als Fluoreszenzlichtleiter wirkenden Streulichtkollektors (14-20) teilweise verspiegelt ist und daß der bzw. die Photoempfänger (24) an den verbleibenden nichtverspiegelten Teil des Lichtaustrittsbereichs (26) optisch angekoppelt sind.

4. Vorrichtung nach einem der vorhergehenden Ansprüche,
dadurch **gekennzeichnet,**
daß der Streulichtkollektor (14, 20) plattenartig ausgebildet ist, daß der bzw. die Photoempfänger (24) am Plattenrand angeordnet sind und daß vorzugsweise der plattenartige Streulichtkollektor (14, 20) zumindest im wesentlichen senkrecht zu einem von der Lichtquelle (12, 12′, 12˝) ausgehenden schmalen Lichtbündel (30) angeordnet ist, wobei insbesondere der plattenartige Streulichtkollektor (14) eine zentrale Öffnung (28) aufweist, durch die das von der Lichtquelle (12) stammende schmale Lichtbündel (30) hindurchtritt.

5. Vorrichtung nach einem der vorhergehenden Ansprüche,
dadurch **gekennzeichnet,**
daß mehrere Lichtquellen (12′, 12˝) vorgesehen sind und daß der Streulichtkollektor (20) zwischen den von den Lichtquellen erzeugten, vorzugsweise zueinander parallelen Lichtbündeln (30) angeordnet ist.

6. Vorrichtung nach einem der vorhergehenden Ansprüche,
dadurch **gekennzeichnet,**
daß der Streulichtkollektor (14) einen Abstand zur Lichtquelle (12) aufweist und zur Erfassung der Vorwärtsstreuung eine der Lichtquelle (12) zugewandte Kollektorfläche umfaßt.

7. Vorrichtung nach einem der vorhergehenden Ansprüche,
dadurch **gekennzeichnet,**
daß der Streulichtkollektor (20) im Bereich der Lichtquelle (12′, 12˝) angeordnet ist und eine die Rückstreuung erfassende Kollektorfläche aufweist.

8. Vorrichtung nach einem der vorhergehenden Ansprüche,
dadurch **gekennzeichnet,**
daß der Streulichtkollektor (16, 18) rohrförmig oder halbrohrförmig ausgebildet ist, daß die Photoempfaänger (24) zumindest an einem Rohrende bzw. an zumindest einem Rohrende und/oder einem der beiden seitlichen Längsränder des Halbrohres angeordnet sind, und daß vorzugsweise das von der Lichtquelle (12) erzeugte schmale Lichtbündel (30) längs der Rohrachse gerichtet ist, und/oder daß der Streulichtkollektor (14-20) aus fluoreszierendem Plexiglas besteht.

9. Vorrichtung nach einem der vorhergehenden Ansprüche,
dadurch **gekennzeichnet,**
daß der Streulichtkollektor (14-20) aus mit fluoreszierendem Farbstoff dotiertem organischen oder anorganischen Glas besteht und/oder, daß die Lichtquelle (12, 12′, 12˝) monochromatisches Licht erzeugt und der Fluoreszenzfarbstoff des Streulichtkollektors (14-20) auf die Wellenlänge des monochromatischen Lichts abgestimmt ist.

10. Vorrichtung nach einem der vorhergehenden Ansprüche,
dadurch **gekennzeichnet,**
daß mehrere, insbesondere übereinander angeordnete Streulichtkollektoren mit unterschiedlicher Absorptionswellenlänge vorgesehen sind und daß den Streulichtkollektoren eine polychromatisches Licht abgebende Lichtquelle zugeordnet ist und/oder daß die Photoempfänger (24) PIN-Photodioden sind und/oder daß die Wellenlänge des Fluoreszenzlichts auf die maximale spektrale Empfindlichkeit der Photoempfänger (24) abgestimmt ist.

## Claims

1. Apparatus for the measurement of aerosols and dust or the like distributed in air, the apparatus comprising
- a light source (12, 12', 12'') for generating an extended elongate scattering volume by means of a light beam (30) directed into the medium (22) to be measured,
- as well as at least one photoreceiver (24),
**characterised in that**
- the photoreceiver (24) is optically coupled to a light exit region (26) of a scattered light collector (14, 16, 18, 20),
- the scattered light collector (14, 16, 18, 20) is made out of transparent fluorescent material and acts as a fluorescent light guide,
- a respective scattering angle range to be detected can be specified by a corresponding size and shape of the surface of the scattered light collector (14, 16, 18, 20) which collects the scattered light,
- the light beam (30) originating from the light source (12) passes the scattered light collector (14, 16, 18, 20) unimpeded.

2. Apparatus in accordance with claim 1, characterised in that several photoreceivers (24) are provided which are uniformly distributed over the light exit region (26) of the scattered light collector (14-20).

3. Apparatus in accordance with claim 1 or 2, characterised in that the light exit region (26) of the scattered light collector (14-20) which acts as a fluorescent light guide is, in part, mirrored; and in that the photoreceiver or photoreceivers (24) are optically coupled to the remaining non-mirrored part of the light exit region (26).

4. Apparatus in accordance with one of the preceding claims, characterised in that the scattered light collector (14, 20) is of plate-like construction; in that the photoreceiver or photoreceivers (24) are arranged at the edge of the plate and in that the plate-like scattered light collector (14, 20) is preferably arranged at least substantially perpendicular to a narrow light beam (30) emerging from the light source (12, 12', 12''), wherein, in particular, the plate-like scattered light collector (14) has a central opening (28) through which the narrow light beam (30) originating from the light source (12) passes.

5. Apparatus in accordance with one of the preceding claims, characterised in that several light sources (12', 12'') are provided; and in that the scattered light collector (20) is arranged between the preferably mutually parallel light beams (30) produced by the light sources.

6. Apparatus in accordance with one of the preceding claims, characterised in that the scattered light collector (14) is at a distance from the light source (12) and includes a collector surface which faces the light source (12) for detecting the forward scattering.

7. Apparatus in accordance with one of the preceding claims, characterised in that the scattered light collector (20) is arranged in the region of the light source (12', 12'') and has a collector surface which detects the back scattering.

8. Apparatus in accordance with one of the preceding claims, characterised in that the scattered light collector (16, 18) is tubular or hemi-tubular; in that the photoreceivers (24) are arranged at least at one end of the tube or at least at one end of the tube and/or at one of the two longitudinal side edges of the hemi-tube; and in that the narrow light beam (30) produced by the light source (12) is preferably directed along the tube axis and/or in that the scattered light collector (14-20) consists of fluorescent plexiglass.

9. Apparatus in accordance with one of the preceding claims, characterised in that the scattered light collector (14-20) consists of organic or inorganic glass doped with a fluorescent dye; and/or in that the light source (12, 12', 12'') produces monochromatic light and the fluorescent dye of the scattered light collector (14-20) is matched to the wavelength of the monochromatic light.

10. Apparatus in accordance with one of the preceding claims, characterised in that several scattered light collectors with different absorption wavelengths are provided, in particular scattered light collectors arranged above one another; and in that a light source which transmits polychromatic light is associated with the scattered light collectors; and/or in that the photoreceivers (24) are p-i-n photodiodes; and/or in that the wavelength of the fluorescent light is matched to the maximum spectral sensitivity of the photoreceivers (24).

## Revendications

1. Appareil pour la mesure d'aérosols et de poussières, ou similaires, distribuée dans l'air, l'appareil comprenant:
- une source de lumière (12, 12', 12'') pour produire un volume de diffusion étendu et allongé au moyen d'un faisceau lumineux (30) dirigé dans le média (22) à mesurer, et
- au moins un photo-récepteur (24),
caractérisé en ce que
- le photo-récepteur (24) est optiquement couplé à une région de sortie de la lumière (26) d'un collecteur (14, 16, 18, 20) de lumière diffusée,
- le collecteur de lumière diffusée (14, 16, 18, 20) est réalisé en matériau transparent et fluorescent et agit en tant que guide de la lumière fluorescente,
- on peut fixer une plage angulaire de diffusion qui doit être respectivement détectée à l'aide d'une taille et d'une forme correspondante de la surface du collecteur (14, 16, 18, 20) qui capte la lumière diffusée, et
- le faisceau lumineux (30) qui provient de la source lumineuse (12) traverse sans entrave le collecteur pour la lumière diffusée (14, 16, 18, 20).

2. Appareil selon la revendication 1, caractérisé en ce qu'il est prévu plusieurs photo-récepteurs (24) répartis régulièrement sur la région de sortie de la lumière (26) du collecteur de lumière diffusée (14 à 20).

3. Appareil selon l'une ou l'autre des revendications 1 et 2, caractérisé en ce que la région de sortie de la lumière (26) du collecteur de lumière diffusée (14 à 20) qui agit en tant que conducteur de lumière fluorescente, est rendue partiellement spéculaire, et en ce que le photo-récepteur ou les photo-récepteurs (24) sont couplés optiquement à la partie restante non-spéculaire de la région de sortie de la lumière (26).

4. Appareil selon l'une des revendications précédentes, caractérisé en ce que le collecteur de lumière diffusée (14, 20) est réalisé en forme de plaque, en ce que le ou les photo-récepteurs (24) sont agencés sur la bordure de la plaque, et en ce que de préférence le collecteur de lumière diffusée (14, 20) en forme de plaque est agencé au moins sensiblement perpendiculairement à un faisceau lumineux étroit qui sort de la source lumineuse (12, 12', 12''), le collecteur (14) de lumière diffusée en forme de plaque présentant en particulier une ouverture centrale (28) traversée par le faisceau lumineux étroit (30) qui provient de la source lumineuse (12).

5. Appareil selon l'une quelconque des revendications précédentes, caractérisé en ce qu'il est prévu plusieurs sources lumineuses (12', 12'') et en ce que le collecteur de lumière diffuse (20) est agencé entre les faisceaux lumineux (30) produits par les sources lumineuses, de préférence parallèlement l'un à l'autre.

6. Appareil selon l'une quelconque des revendications précédentes, caractérisé en ce que le collecteur de lumière diffuse (14) est situé à distance de la source lumineuse (12) et présente une surface collectrice dirigée vers la source lumineuse (12) pour saisir la diffusion en direction avant.

7. Appareil selon l'une quelconque des revendications précédentes, caractérisé en ce que le collecteur de lumière diffuse (20) est agencé dans la région des sources lumineuses (12', 12'') et présente une surface collectrice qui capte la diffusion en retour.

8. Appareil selon l'une quelconque des revendications précédentes, caractérisé en ce que le collecteur de lumière diffuse (16, 18) est réalisé en forme tubulaire ou semi-tubulaire, en ce que les photo-récepteurs (24) sont agencés au moins à une extrémité du tube ou à l'une au moins des extrémités et/ou l'une des deux bordures longitudinales latérales du demi-tube, et en ce que le faisceau lumineux étroit (30) produit par la source lumineuse (12) est dirigé de préférence le long de l'axe du tube, et/ou en ce que le collecteur de lumière diffuse (14 à 20) est réalisé en plexiglas à fluorescence.

9. Appareil selon l'une quelconque des revendications précédentes, caractérisé en ce que le collecteur de lumière diffuse (14 à 20) est réalisé en un verte organique ou inorganique dopé avec un colorant fluorescent et/ou en ce que la source lumineuse (12, 12', 12'') produit une lumière monochromatique, et le colorant fluorescent du collecteur de lumière diffuse (14 à 20) est accordé à la longueur d'onde de la lumière monochromatique.

10. Appareil selon l'une quelconque des revendications précédentes, caractérisé en ce qu'il est prévu plusieurs collecteurs de lumière diffuse, en particulier agencés les uns au-dessus des autres, avec des longueurs d'onde d'absorption différentes, et en ce qu'une source lumineuse qui fournit une lumière polychromatique est associée aux collecteurs de lumière diffuse, et/ou en ce que les photo-récepteurs (24) sont des photodiodes de type PIN, et/ou en ce que la longueur d'onde de la lumière fluorescente est accordée sur la sensibilité spectrale maximale des photo-récepteurs (24).
